# EUROPEAN PATENT SPECIFICATION

(11) **EP 2 895 777 B1**
(45) Date of publication and mention of the grant of the patent: **11.04.2018**
(21) Application number: 13836994.7
(22) Date of filing: 17.09.2013
(51) Int. Cl.: F16K 47/00

(54) **DEVICE TO REDUCE THE PRESSURE OF A LIQUID FLOW AND A REGULATING VALVE**
VORRICHTUNG ZUR VERRINGERUNG DES DRUCKS EINES FLÜSSIGKEITSFLUSSES UND REGELVENTIL
DISPOSITIF DE RÉDUCTION DE LA PRESSION D'UN FLUX DE LIQUIDE ET VALVE DE RÉGULATION

(30) Priority: 17.09.2012 NO 20121049
(43) Date of publication of application: 22.07.2015
(73) Proprietor: Hagevik, Paal Irgens, 5217 Hagevik (NO)
(72) Inventor: Hagevik, Paal Irgens, 5217 Hagevik (NO)
(74) Representative: Acapo AS
(86) International application number: PCT/NO2013/000044
(87) International publication number: WO 2014/042539

(56) References cited:
- EP-A1- 0 013 601
- EP-A1- 0 013 601
- GB-A- 2 341 660
- GB-A- 2 341 660
- US-A- 3 665 965
- US-A- 3 665 965
- US-A- 4 148 337
- US-A- 4 148 337
- US-A1- 2011 073 792
- US-A1- 2011 073 792
- US-B1- 6 244 297
- US-B1- 6 244 297
- US-B2- 6 644 620
- US-B2- 6 644 620

## Description

The present invention relates to a valve construction for the reduction of the pressure in a liquid flow from an inlet to an outlet of the valve construction, to prevent any gas formation by flash boiling in the liquid, comprising a closing valve body that can be reset between a position that closes for the through flow of liquid and a position that opens for full through-flow, and any position in between. More specific the invention concerns a valve construction for the reduction of the pressure in a liquid that flows through an extended, hollow body. The closing body of the valve construction for the reduction of pressure in a liquid that flows through a pipe can be set between a position where it closes for the flow of liquid through the valve and a position where it permits full through-flow, and where the liquid pressure is reduced in all valve positions between closed and fully open, i.e. that the valve construction functions as a regulating valve.
The invention relates in particular to a ball valve construction where the closing body is a rotatable ball arranged in a valve housing.
A regulating valve is a valve that can continuously regulate pressure, mass, temperature or level around a set point. The valve has properties allowing it to be given a particular setting and can be stabilised in all positions from a closed to a fully open position.
The valve construction can be placed in a pipe through which liquid flows.

The valve construction of the invention relates to a new device that can provide a controlled pressure reduction in flowing liquids.

There are common known installations that handle flowing liquid with a high pressure, and where one seeks to reduce the liquid pressure in that the liquid is led through valves that initiate a drop in the liquid pressure across the valve.

For liquid processes this can lead to high pressure drops after the smallest narrowing in the valve. In certain cases, the pressure drops to below the evaporation pressure for the liquid. The liquid will then go completely, or partially, over into a gas phase. After the pressure has been stabilised, it may go back to the liquid form again, but with such transitions an energy distribution occurs which can be damaging for the material in the valves and downstream pipes.

The standard solution today for the regulation of difficult process media is globe valves with a diffusing trim for gas valves, i.e. that the flow paths are split so that the flow after the split is not mixed with other split streams through the valve. For liquid valves this is solved by pressure step trims that are constrictions where the pressure increases with a subsequent larger volume where the pressure is reduced less than what it increased in the constriction. Several constrictions with subsequent volume increases can follow with several steps of pressure reduction.

The pressure step reduction/energy decomposition takes place in the body of the "cage" of the valve, which is the cylinder the valve plug travels in.

The disadvantage with this type of solution is that the area where the process energy shall be reduced is limited to the thickness of the cylinder (cage) that guides the plug in the valve. On valves with many pressure steps this is solved by a stack of plates where some are machined for paths from the innermost to the outermost or vice-versa.

Or it is solved in that the cylinder (cage) is built up by several pipes being placed on top of each other with different perforations and spacers between the pipes to safeguard the volume between the pressure steps.

With many pressure steps and long paths this will take up much of the volume of the body of the cylinder (cage) and fewer paths can be used. As a consequence this reduces the capacity of the valve.

With regard to prior art within pressure reduction in liquids, reference is made to Chinese patent CN2-01421225, German patent DE-43 28 095, European patents EP 013.601 and EP-456.132, British patents GB-117.203, GB-2.341.660 and GB-2.237.860, Dutch patent NL-8602008, US patent US-3.665.965, US-3.776.278, US-5.509.446, US-4.148.337, US-6.644.620, US-6.244.297 and US patent application 2011/0073792 and also international publications WO-9802682A1 and WO-2009076228.

The solutions in EP-0013601 A1 and WO2009/076228A1 describe pressure reduction in ball valves and are considered to be closest to the present invention. Both these solutions are based on pressure reduction between plates that are placed in different ways inside the valve. As can be seen, the present invention is based on using pipes instead of the known plate technology.

US-3.665.965 (Baumann) shows a solution for pressure reduction in a pipe stream but without any form for regulation. It shows two perforated plates that are inserted inside, across the pipe.

With instead of producing the pressure steps in an extended pipe one will get the most effective way to control the pressure reduction steps, i.e. that a linear reduction of the pressure is generated, something which effectively will prevent the gas formation by flash boiling in the liquid.

Therefore, there are no corresponding solutions with the present geometry and simplicity whereby one but can control the reduction of pressure in liquids.

When one considers the solutions that are closest to the present designs, EP 0013601 and WO2009076228, these are relatively new. Both these solutions are marketed today as a revolution within advanced control valves.

In the light of this, it is clear that the solutions according to the present invention come at a right time with regard to today's development of advanced control valves and that they therefore have commercial potential.

It is an aim of the invention to provide a valve construction with a closing body that can reduce the pressure in flowing liquids. One aims to provide a new form of a ball valve.
Furthermore, it is an aim to provide a new liquid pressure reducing valve construction that can be placed in a pipe whereby the pressure in the processed liquid is gradually and continuously reduced from a higher to a lower pressure.

An essential aim of the invention is to reduce the pressure in the liquid phase without flash boiling with gas formation happening.
The valve construction according to the invention is characterised in that the valve body comprises a liquid through flow unit comprising a number of hollow bodies, wherein the inside of each hollow body comprises a solid unit that together with the inside of the hollow body defines a separate flow channel exhibiting agradually or continuously increasing flow cross section, calculated from an inlet end to an outlet end of the hollow body.

The preferred embodiments of the valve construction appear in the dependent patent claims 2-11.

It is preferred that the closing body of the valve construction has more than one pipe or flow channels with pressure reducing constructions, as one wishes that the pressure reduction takes place in the pressure reducing pipes and not in the valve seat. This means that if the closing body of the valve construction has one pipe/channel only, it must be constructed for an optimal opening of the valve, for with a smaller opening the pressure reduction will then be taken over the valve seat and not in the pressure reducing construction. Therefore, two or more pipes or flow channels are preferred.

The invention shall now be explained in more detail with reference to the enclosed figures, in which:
Figure 1 shows a pressure course for a liquid that is led through a pressure reducing valve, according to known solutions, given in pressure as a function of the valve length expressed as "distance in the valve".
Figure 2 shows a pressure course for a liquid that is led through a pressure reducing valve construction, according to the present invention given in pressure as a function of the distance in the valve. One avoids that the liquid boils which is shown in that the curve lies above the evaporation line.
Figures 3A,3B and 3C show a cross section of a ball valve construction of the invention with a closing body, where the closing body is in closed, partially open (50%) and fully open (100%) positions, respectively.
Figure 3D shows a longitudinal section through the valve construction where the closing body is in a fully open position.
Figure 4A shows a partly cut away pipe 10 in which a number of pressure reducing units are inserted with discs 14 mutually spaced apart, for the placing of a closing body of a valve construction according to the invention, such as for insertion in a pipe conducting a liquid.
Figure 4B shows a preferred embodiment of a disc unit 18 for insertion in the pipe 10.
Figure 4C shows an example of the disc 14 that is perforated with holes 16.
Figure 5 shows a preferred embodiment of a pressure reducing unit for insertion in pipe of a valve construction to provide a pressure reduction in the pipe by itself.
Figure 5A shows a second alternative of the invention, a perspective of a solid rod that is machined in the peripheral surface for the formation of a number of groove-formed flow channels with a gradually expanding cross section from upstream to downstream. Alternatively, this surface form can be provided by metal casting in a mould.
Figure 5B shows the pressure reducing rod according to figure 5A inserted in a pipe 12 that is partly cut away.
Figures 6, 7 and 8 show three cross sections to indicate how the area of the longitudinal grooves in the surface of the rod in the pipe according to the figures 5-6 increases along the length from the inlet to the outlet.
Figure 9 shows a longitudinal perspective of a third embodiment of a pressure reducing part-unit for a such insertion in a pipe of the valve construction, in the form of a solid rod that is machined in the peripheral surface for the formation of a number of spiral groove-formed flow channels with a gradually increasing cross section from upstream to downstream.
Figure 10 shows in a longitudinal section, the pressure reducing insertion (the rod) placed in the pipe 12 of a valve construction that is partly cut away in the figure.
Figure 11 shows a fourth alternative embodiment of a liquid pressure reducing insertion in a pipe. In this version the rod has a square cross section and the longitudinal corners are cut off, either in a straight cut or in an arch-shape to form surfaces that converge against the longitudinal axis A-A through the rod to provide an increasing flow cross section when the rod is inserted in a pipe in the form of a square pipe.
Figures 12A, B and C show in a cross section of the rod how a flow cross section increases from the inflow end to the outflow end of the rod when it is inserted in a square pipe of a valve construction, i.e. in three sections along the unit.
Figure 13 shows a cross section of a rod according to the embodiment in figures 11 and 12 inserted in a pipe with a circular cross section, in a valve construction (ball valve), as the tubes that lie along the inside of the pipe are rounded to adapt to the inside of the pipe. In this case the tubes can be inserted in and also have a square shape initially, so that the tubes are simply set in with their longitudinal sides close to each other and against the inside of the square pipe.
Figure 14 shows a fifth alternative where pipe and inserts of the valve construction according to the preceding examples are replaced by a cylindrical block in which a number of mutually parallel channels are bored out, each with a stepwise increasing bore cross section from the inlet end to the outlet end. In this case there are three steps.
Figure 15 shows a longitudinal cross section through the block along the line X-X.
Application of pressure reducing units according to the figures 3, 6, 11 .13 and 15.
Figure 16 shows a number of pressure reducing pipes of the above mentioned versions placed parallel next to each other in a bundle in the valve construction.
Figure 17 shows a pressure course that can be experienced for a liquid that is led through a pressure reducing unit in the valve construction, constructed according to 5A,5B with pressure reducing units according to figure 3 and as given in pressure as a function of distance through the valve.
Figure 18 shows a different design of a unit for a closing body in the form of a bundle construction of three sets of pipe sections, placed in a forward and back-running loop and in parallel with each other, which can be space saving in the valve housing.

### The invention:

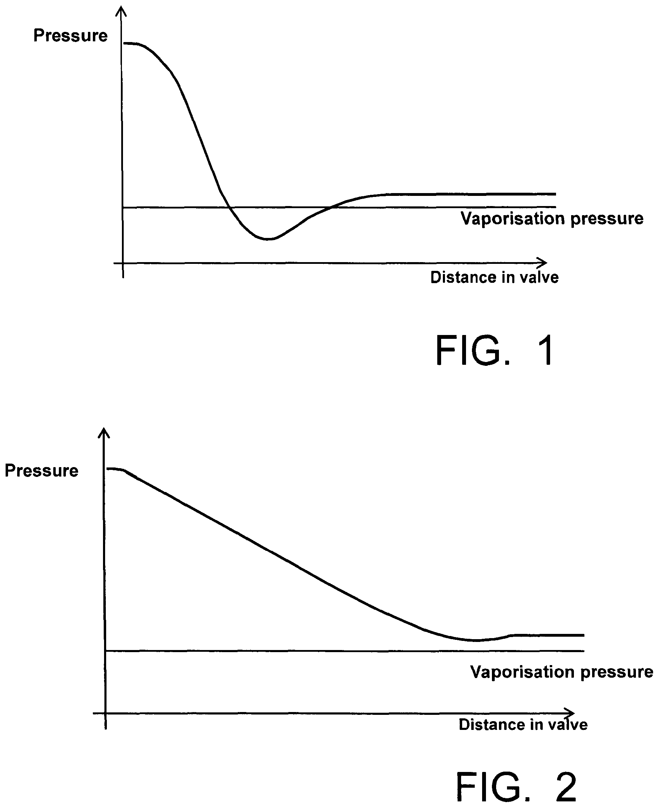

As mentioned above, figure 1 shows a pressure course for a liquid that is led through a pressure reducing valve, according to known solutions, given in pressure as a function of valve length expressed as "distance in the valve", where the liquid pressure falls below the vaporisation pressure and the liquid will begin to boil.

Figure 2 shows the pressure course one achieves with the present invention as one avoids that the liquid boils, something that is shown in that the curve lies above the evaporation line.

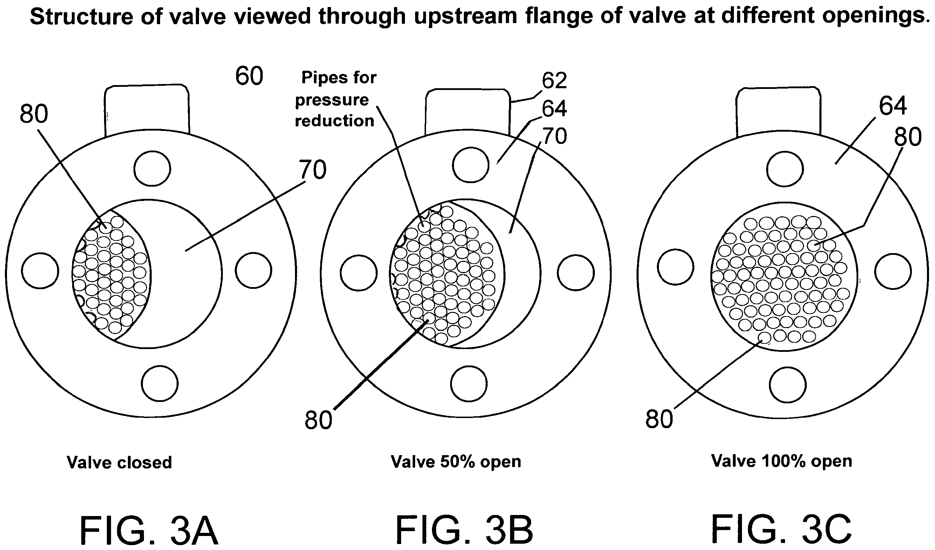

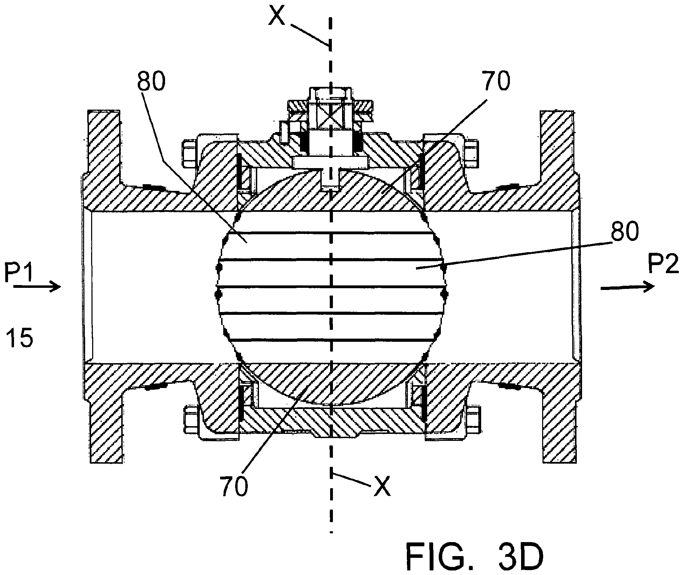

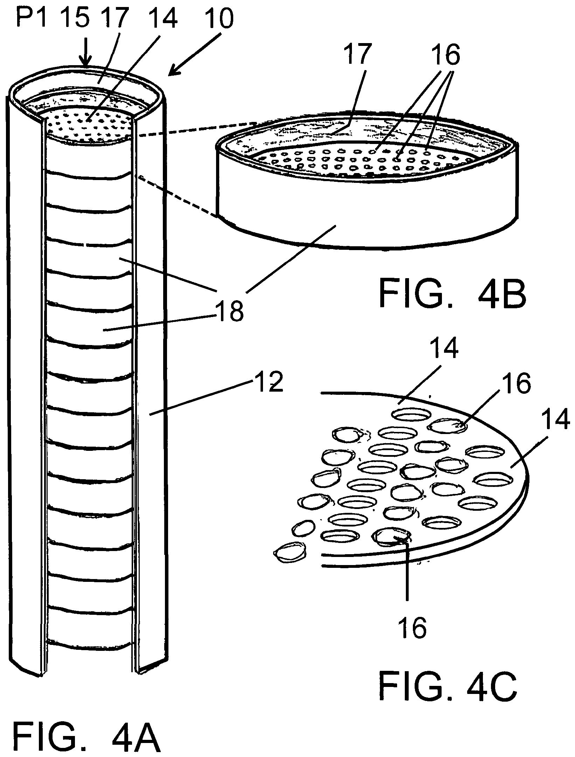

Figures 3 and 4 show the new construction of a ball-formed closing body in a (ball) valve construction according to the invention. The ball valve comprises a valve housing 60 with a valve top 62, a valve flange 64 for fitting to an adjoining pipe flange and a ball-formed closing body. The axis X-X represents the axis of rotation of the ball-formed closing body.

The closing body 70 comprises one or more pipes 12 in parallel with the pressure reducing bodies according to the invention. The pipes 12 can be placed mutually parallel in the ball body 70. According to one solution the pipes 12 are immersed in a casting material of a hardened material and the assembly is machined to a round, ball-formed closing body 70.

The valve is closed in figure 3A in that the closing body 70 is rotated so that liquid can not pass. Only some of the pipes 80 on the upstream side are exposed to the liquid but the same pipes on the other downstream side are closed.

In figure 3B the closing body 70 is turned anticlockwise and about 50% of the pipes are exposed to through-flow. In figure 3C the valve is fully open and all the pipes in the set, lying in parallel with the flow path, are exposed to through-flow of the liquid.

According to the invention the active closing body in a regulating valve construction comprises one or more such pipe units where the flow through each pipe subjects the liquid to a stepwise or continuous pressure drop. By adjusting the rotation of the ball valve version one can regulate with respect to the through flow-amounts in terms of volume and pressure.

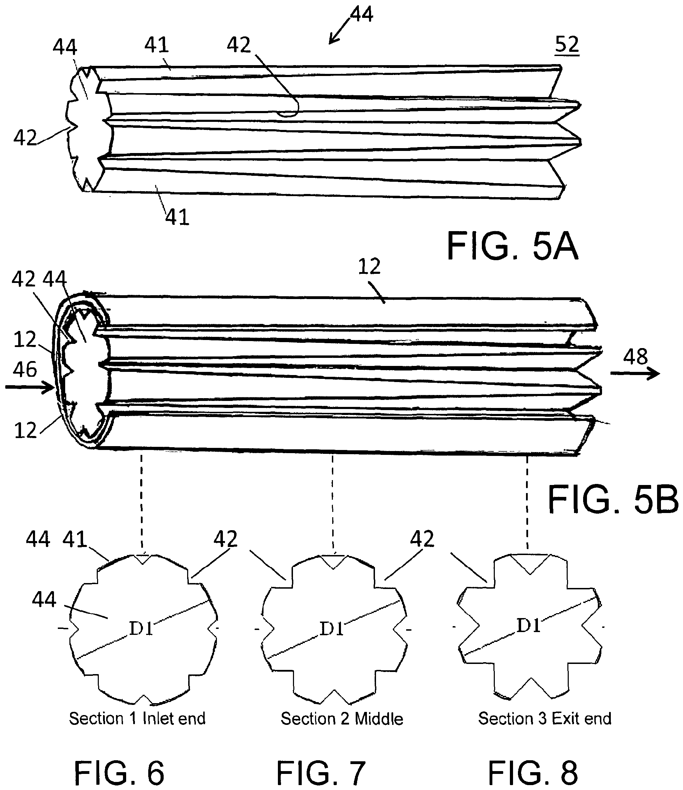

Figure 3D shows a longitudinal section through the ball valve construction 150 where the closing body 70 is set on full through-flow of liquid. A bundle of pressure reducing units 80 are fitted in the closing body. The liquid flows from left to right in the figure, and the liquid pressure is reduced from P1 to P2.
Application of parallel perforated plates in each pipe as described in connection with the figures 4A-C will provide a stepwise pressure drop. Application of tubes that form channels with an evenly increasing flow cross section, as described in connection with the figures 5-15, provides a continuous pressure drop through the valve.

### Presentation of new solutions for a valve construction for liquid pressure reducing.

### Embodiment 1:

Reference is made to the figures 3-4 that show a first embodiment of the closing body in a regulating valve construction of the invention, in particular a ball valve.
Figure 4A shows a pressure reducing pipe unit with the reference number 10 and which can make up a part of a fluid carrying pipe of a valve construction in a pipeline that carries a high pressure liquid. The unit comprises an extended pipe 12 which is shown partly cut away in the figure to show a number of perforated plates 14 that are mounted across the longitudinal direction (flow direction) of the pipe, mutually spaced apart and in parallel inside the pipe 12.
Figures 4A and 4B indicate that plates or discs 14 are inserted, each fitted as a part of casings 18 shown in figures 4A and 4B. Each plate or disc 14, cf. figure 4C is perforated with a set of holes 16 through which the liquid can flow. A hollow space or volume 17 is established between the plate 14, as a consequence of the plate distance, through which the liquid flows in after having passed through the holes in the preceding plate.
The thickness of the plates 14 can vary according to the dimensions of the construction depending on how large the liquid volumes it shall be processing per time unit. According to one example one can use a construction with plates having a disc thickness of 2 millimetres and a mutual plate distance of 2 mm, as the axial length of the casing 18 can be 4 millimetres. The perforation holes can have a diameter of 0.7 millimetres, as there can be around 10 holes with a diameter of 0.7 mm across the diameter extension of the plate. For example, in one construction a plate can have a diameter of 1 centimetre.

To provide further pressure reduction in the liquid, the plate forms 14 inside the pipe of a valve construction must have a gradually increasing through-flow area from plate to plate in the row. This can be carried out in two ways.
- In that one uses the same number of perforation holes 16 in each plate 14, but where the holes have a stepwise increasing opening area from one plate to the next in the row (from inlet to outlet).
- In that the number of perforation holes 16 with approximately the same opening area increases gradually from one plate to the next in the row (from inlet to outlet).

For each perforation/hole 16 in an associated plate 14 through which the liquid passes and out in an intermediate hollow space 17 between two plates in the row, the liquid pressure is reduced. As we have a gradually increasing hole cross section for each subsequent plate, the liquid pressure decreases through the pipe from the inlet to the outlet. The pressure is reduced step by step for each plate passing and since the plates lie with a relatively short mutual distance/space apart, the total result becomes a continuous pressure reduction in the liquid.

An actual flow direction through the pipe unit is shown in figure 4A with the arrow 15. A liquid pressure upstream of the unit is shown by P1 while it is given as P2 downstream.

According to a preferred embodiment, shown in the figures 4, the mutual plate/disc distance is set up in that each plate 14 is formed with an outer ringformed, axially directed flange 18 with a peripheral extension that corresponds to the internal diameter of the pipe 12 so that each of the plates 14 covers the whole of the internal cross section of the pipe 12 and that all the passing liquid must flow through the perforations 16 in each plate 14. Thus, the flanges 18 can define said space between two adjoining plates of the stacked plates 14. Alternatively, one can use perforated, circular discs with the same diameter as the internal diameter of the pipe and then use simple spacer casings with the same outer diameter as the internal diameter of the pipe. The unit is then fitted in that the spacer casings and discs are stacked on top of each other and in turn alternatively inside the pipe.

Each hole in each perforated plate defines a throttling step with a pressure recovery volume. The number of plates across the pressure reducing unit can be adjusted to the conditions of the liquid flow that shall be handled and be pressure reduced in the processing installation. Figure 3A shows 15 plates.

### Embodiment 2:

The second version of an insert of a pipe of a valve construction of the invention is illustrated in figure 5. This version is shown in figure 5A, comprising a solid rod or bolt 44 where one or more grooves 42 are formed in its circular surface 41 from the surface and running in parallel with the longitudinal direction of the rod from its one end to its other. Each groove 42 has a gradually increasing cross section from the upstream end 50 to the downstream end 52, something which is illustrated in figure 5B and in the cross sections in the figures 6, 7 and 8. The grooves preferably have a V-shaped cross section with a concave shape, but can alternatively have other forms, such as a U-form or be oval. As it can be seen, eight such longitudinal grooves are formed along the rod surface 41, around the circumference of the rod 44 shown with a diameter D1 in the figures 6 - 8.

As shown in figure 5B, the rod 44 is placed inside the pipe 12 sealing against the pipe inner wall so that the liquid can only flow through the longitudinal grooves bordered by the pipe in the wall and the concave grooves 42 of the rod 44.

### Embodiment 3:

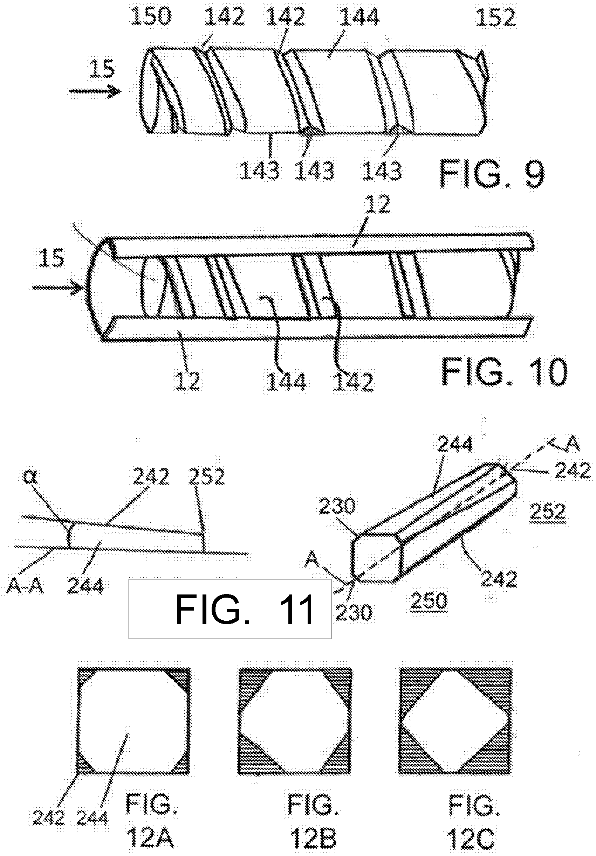

Instead of forming grooves along the longitudinal direction of the rod, they can be formed as threaded grooves in a spiral form along and round the rod from the one end 150 to the other end 152 as can be seen in figure 9. Figure 9 shows a such extended rod 144 in a side outline, and which is formed with a spiral-shaped threaded groove 142 with a gradually increasing groove cross section 143 from the circular surface 141 of the rod from the inlet end 150 to the outlet end 152.

Figure 10 shows a such rod that is inserted in an outer pipe 12 analogous to the pipe shown in figure 5 (and figure 5B). The outer surface of the rod is fitted snugly and close to the inside of the pipe 120 so that there are no slits or spaces between the inner wall and the outer side of the rod other than the spiral grooves 142, so that any liquid leaks shall not occur in the slit. The pipe 12 is partly cut away to show how the rod lies inside the pipe. The grooves of the different forms are appropriately machined from one cylindrical rod, but they can also be formed in a mould from a melted metal or another suitable material such as hard plastic.

When this pressure reducing unit of a valve construction is connected to the main stream for an overpressure liquid, the liquid is forced to flow in through the flow path(s) that is defined and limited by the groove surface and the inner wall of the pipe and, out through the outlet. As a consequence of the gradually and linearly increasing cross section of the flow paths, the reduction in the pressure on the liquid is also approximately linear.

### Embodiment 4.

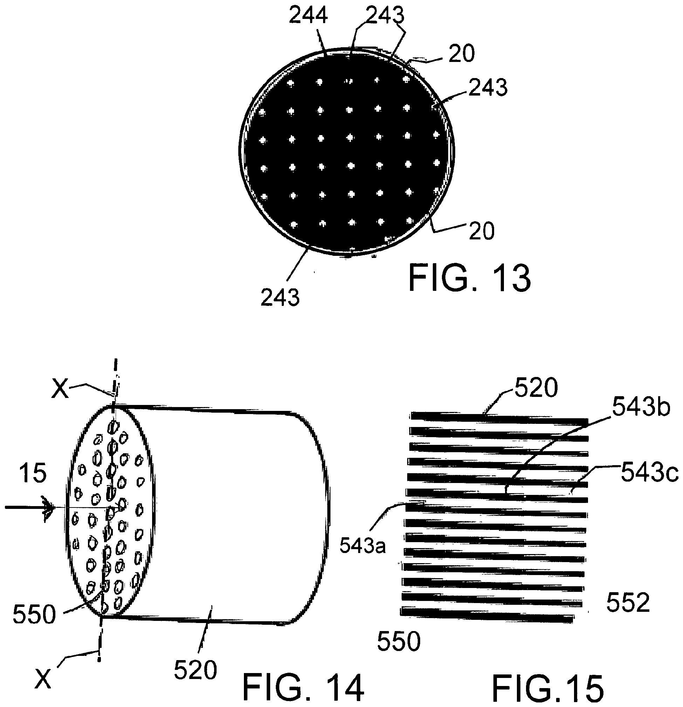

Figures 11, 12 and 13 show a fourth alternative embodiment of a liquid pressure reducing insert inside a pipe 20 of a valve construction. In this version figure 11 shows an extended rod 244 with an approximately multi-edged, such as square, cross section and the longitudinal corners 230 from the one 250 to the other rod end 252 are cut off, either cut off in a straight surface 242 or in an arch shape, to provide an increasing flow cross section when the rod 244 is inserted in a pipe so that it seals in a way similar to the examples above. In this case, as the rod has a square basic shape, it is inserted into a square pipe. The outer surface of the rod 244 is fitted snugly and seals to the inside of the square pipe (not shown) so that there are no slits or spaces between the inner wall and the outer side of the rod other than the slit 243 or the flow cross section 243 (figures 13a,b,c) in the corners that are formed between each groove 242 and a pipe outer wall, so that leakage of liquid can not occur in the slits 243. Here, there are four such flow channels 243, one in each corner. The angle α between the axis A-A and the side surface 242 is indicated uppermost in figure 11.

Figures 12A, B and C show, in a cross section of the rod inserted in a square pipe 120, how the flow cross section increases from the one (inflow) end 250 to the other end 252 of the rod 244 in the square pipe 120, i.e. in three sections along the rod unit.

A plurality of such units shown in figure 11 can be fitted to form a pipe bundle, where the rods 244 are bundled closely together, joined and glued together. It is most practical that the form of the pipes is a quadrangle, i.e. square or rectangular. Then, four and four rods form between them a longitudinal channel 243 with a quadratic cross section that increases from the inflow to the outflow end. Both the ends of the bundle comprise flanges for the connection to the liquid carrying pipe. Then, it will reduce the pressure in the pipe. The bundle, as shown in figure 13, can have a square cross section itself, or be formed with the surface such that it has a pipe-formed cross section and can be placed inside a pipe-formed outer casing 20 shown in figure 13, as in the other shown solutions.

### Embodiment 5.

Figure 14 shows a fifth alternative where pipes and inserts according to the preceding examples are replaced by a cylindrical block 520 in which a number of mutually parallel channels 543 are bored out, each with a stepwise increasing bore cross section from the inlet end to the outlet end. In this case there are three steps as shown in figure 15. Figure 15 shows a longitudinal cross section through the block 520 along the line X-X.

13 mutually parallel holes or borings are shown through the block across its diameter, lengthwise. The entry starts at the inlet at 550 with the boring 543a with a given bore cross section, in a given distance into the block, to be expanded to a larger bore cross section 543b and further after a new given distance an even larger bore cross section 543c that runs a distance and out in the other end of the block 520 at the outlet end 552.

When this embodiment is manufactured one can bore the hole 543c in from the outlet end with the largest drill which is then replaced by a smaller diameter drill further into the block to form the section with a smaller diameter 543b, and then to reduce the drill to the smallest drill to form said entry hole 543a.

In the embodiment in figure 15, there are altogether 66 holes/bores 543 drilled through the block with a gradually increasing flow cross section. In the embodiment in figure 14 there are 40 flow channels 243 with a gradually increasing flow cross section. These embodiments can be fitted into a valve or pipe to provide a pressure reduction in a flowing liquid.

The channels 543 can also be formed as circular holes (without steps or stepwise changes) with a continuously increasing flow cross section.

A curve for the pressure course for the construction that will give a linear pressure reduction relates to the embodiments described and shown in the figures 5-8, 9-10 and 12/13, respectively, is as shown in figure 2. The pressure is reduced linearly in a continuous step over the whole length/distance of the pipe and the energy in the liquid is reduced and does not fall below the evaporation pressure for the actual liquid shown by the horizontal line marked "evaporation pressure".

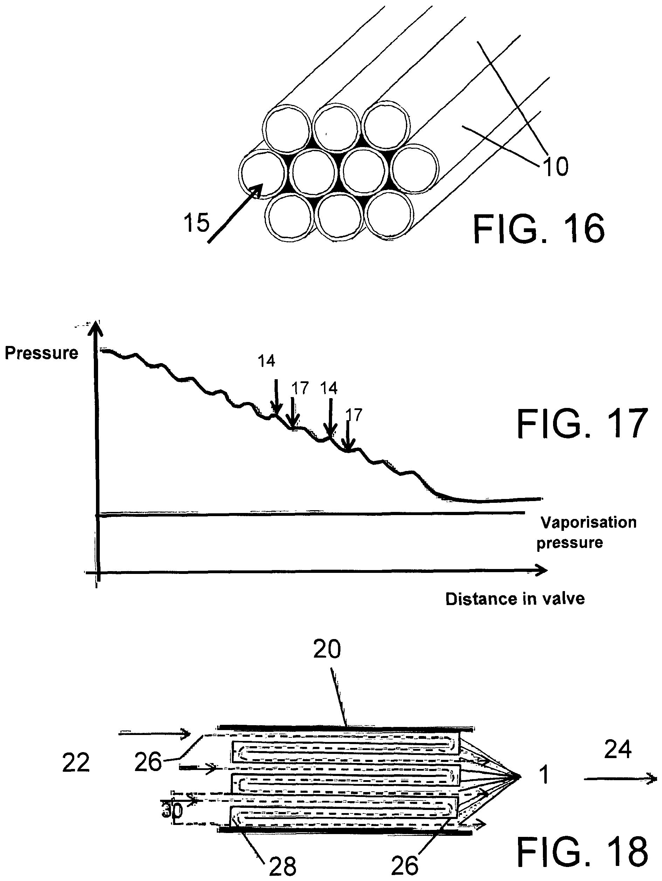

The variants or embodiments shown in the first and fifth embodiments represent stepwise pressure reductions in the liquid, as illustrated in figure 18, see the next section.

### Application of pressure reducing units according to the figures 3, 5, 10. 13 and 15.

These tubes/pipes as shown in the given figures can be put together as a bundle as shown in figures 16 and 19, and the whole pipe bundle can according to the invention be placed inside the opening/closing body in a ball valve construction, gate valve, plug valve or linear valve (Mokveld type).

Figure 18 shows another preferred embodiment where a number of pipe sections are arranged mutually in parallel and form a zigzag-formed flow course of a valve construction in that two adjoining pipe ends are connected to each other with the help of U-formed pipe parts 28. In this part of the construction the process medium goes from 22 into a nearby pipe via the U-formed pipe part 28 and flows in the opposite direction to the main flow direction, to turn one more time and then be led further out into the main pipe at 24. Thereby one achieves a compact and space saving embodiment when the unit shall be placed in a regulating valve. The figure shows that three such units 30 are fitted together.

With this solution the medium/liquid will pass through the unit three times with several pressure steps.

When the construction is such that the liquid is made to flow in a zigzag course the pressure reduction will take place in a larger volume and over a longer course in the valve. The curve for the pressure reduction will therefore be longer and the reduction curve will be flatter, as indicated by the curves in the figures 2 and 17.

It can be seen by the curve in figure 18, for stepwise pressure reduction, where each step corresponds to a plate 14 in the row in the embodiment in figure 3. Furthermore, the figure shows a small pressure increase as the liquid meets and builds up in front of the holes/perforations, see the arrow 14 in figure 6, and the pressure curve goes over into an arch-shaped drop when the liquid streams out into the subsequent volume, see the arrow 17. Thus, the pressure does not drop below the evaporation pressure for the actual liquid shown by the horizontal line marked "evaporation pressure". But the total pressure change from the inlet to the outlet is considered overall as a continuous, approximately linear course.

At the same time the process medium will have an easier path through the valve and outlet that runs straight in the process flow direction and the process flow is made laminar. In normal globe valves the process flow will be turbulent instead. In addition several pressure reducing steps can be implemented as a larger volume is used for the pressure reduction than for normal globe valves. This will make the pressure reduction curve more flat and it is less likely that the pressure will fall below the evaporation pressure. Thus one avoids gas formation in the liquid.

## Claims

1. Valve construction (60) for the reduction of the pressure in a liquid flow from an inlet (22) to an outlet (24) of the valve construction (60), to prevent any gas formation by flash boiling in the liquid, comprising a closing valve body (70) that can be reset between a position that closes for the through flow of liquid and a position that opens for full through-flow, and any position in between, **characterised in that** the valve body (70) comprises a liquid through flow unit comprising a number of hollow bodies (12,80), wherein
the inside of each hollow body (12,80) comprises a solid unit (44,144) that together with the inside of the hollow body defines a separate flow channel exhibiting a gradually or continuously increasing flow cross section, calculated from an inlet end to an outlet end of the hollow body.

2. Valve construction according to claim 1, **characterised in that** each solid unit (44,144) is an approximately circular rod-formed body (44,144) the surface of which is formed with extended recesses (42,142) that define, together with the inside of the hollow body (12,80), said flow channels with increasing cross sections.

3. Valve construction according to claims 2, **characterised in that** the recesses (42,142) have the form of concave, V-shaped or U-shaped recesses, formed along the body (12,80) or they are formed in a recessed, spiral shape around the solid rod-formed body.

4. Valve construction according to any of claims 1-3, **characterised in that** the solid, rod-formed body (44,144) comprises a multi-sided form, the extended corners (230) of which, from one end (250) to the other end (252), are cut to form a plane or arched surface (242) that converges up to the other end (252) towards a longitudinal axis A through the body.

5. Valve construction according to claim 1, **characterised in that** the solid unit comprises a number of extended rod bodies (244) with a square form that lie mutually close to each other according and each rod body (244) is arranged inside a casing (20) **in that** four mutually adjoining rods (244) between themselves define longitudinal flow paths (243a) with a gradually increasing cross section from inlet (22) to outlet (24).

6. Valve construction according to claim 1, **characterised in that** a gradually stepwise increasing through-flow cross section is provided **in that** the hollow body (12,80) comprises a number of internally parallel plates (14) mutually spaced apart arranged inside the pipe across the longitudinal direction of the hollow body (12,80), and the plates are perforated with a number of separated holes (16) through which the liquid can flow.

7. Valve construction according to claim 6, **characterised in that** the plates (14) have the same number of holes (16) and a stepwise increasing opening area from the inlet (22) to the outlet (24), and/or that the number of holes (16) with the approximately same opening area, increases gradually in the row from the inlet (22) to the outlet (24).

8. Valve construction according to any of claims 6-7, **characterised in that** each plate (14) is formed with an outer axially directed flange (18) with a peripheral extension corresponding to the internal diameter of a hollow body (12,80) so that each of the plates (14) covers the cross section of the hollow body (12,80) and that the flange (18) defines a space (17) between two adjoining plates (14), or that each plate (14) has the same diameter as the internal diameter of the pipe and spacer casings with the same outer diameter as the internal diameter of the hollow body (12,80) define the plate distance, as the unit is fitted with casings and plates in turn alternately stacked on top of each other inside the hollow body (12,80).

9. Valve construction according to any of the preceding claims, **characterised in that** a number of bundles of parallel hollow bodies (12,80) are mutually connected via U-formed pipe parts (28) to form a zigzag flow course.

10. Valve construction according to claim 9, **characterised in that** each bundle comprises three parallel hollow bodies (12,80) that are connected with each other via U-formed pipe parts (28).

11. Valve construction according to any of the preceding claims, **characterised in that** the closing body (70) is a ball valve arranged in a valve housing (60).

## Patentansprüche

1. Ventilkonstruktion (60) für die Verringerung des Drucks in einem Flüssigkeitsstrom von einem Einlass (22) zu einem Auslass (24) der Ventilkonstruktion (60), um eine etwaige Gasbildung durch blitzartiges Sieden bzw. Entspannungsverdampfung zu verhindern, umfassend einen schließenden Ventilkörper (70), der zwischen einer Position, die den Durchfluss einer Flüssigkeit sperrt, und einer Position, die für einen vollen Durchfluss öffnet, und einer beliebigen Position dazwischen zurückgesetzt werden kann, **dadurch gekennzeichnet, dass** der Ventilkörper (70) eine Flüssigkeitsdurchflusseinheit mit einer Anzahl Hohlkörper (12, 80) aufweist, wobei
das Innere jedes Hohlkörpers (12, 80) eine massive Einheit (44, 144) aufweist, die zusammen mit der Innenseite des Hohlkörpers einen separaten Strömungskanal definiert, der einen allmählich oder kontinuierlich zunehmenden Strömungsquerschnitt aufweist, berechnet von einem Einlassende zu einem Auslassende des Hohlkörpers.

2. Ventilkonstruktion nach Anspruch 1, **dadurch gekennzeichnet, dass** jede massive Einheit (44, 144) ein annähernd kreisförmiger stabförmiger Körper (44, 144) ist, dessen Oberfläche mit ausgedehnten Ausnehmungen (42, 142) ausgebildet ist, die zusammen mit der Innenseite des Hohlkörpers (12, 80) die Strömungskanäle mit zunehmenden Querschnitten definieren.

3. Ventilkonstruktion nach Anspruch 2, **dadurch gekennzeichnet, dass** die Ausnehmungen (42, 142) die Form konkaver, V-förmiger oder U-förmiger Ausnehmungen aufweisen, die entlang dem Körper (12, 80) ausgebildet sind, oder sie in einer ausgenommenen Spiralform um den massiven stabförmigen Körper herum ausgebildet sind.

4. Ventilkonstruktion nach einem der Ansprüche 1 - 3, **dadurch gekennzeichnet, dass** der massive stabförmige Körper (44, 144) eine mehrseitige Form aufweist, deren ausgedehnte Ecken (230) von einem Ende (250) zum anderen Ende (252) geschnitten sind, um eine ebene oder gewölbte Oberfläche (242) auszubilden, die zum anderen Ende (252) in Richtung einer Längsachse A durch den Körper konvergiert.

5. Ventilkonstruktion nach Anspruch 1, **dadurch gekennzeichnet, dass** eine massive Einheit eine Anzahl ausgedehnter Stabkörper (244) mit einer viereckigen Form aufweist, die entsprechend gegenseitig nahe beieinander liegen und jeder Stabkörper (244) innerhalb eines Gehäuses (20) derart angeordnet ist, dass vier gegenseitig angrenzende Stäbe (244) zwischen ihnen longitudinale Strömungswege (243a) mit einem allmählich zunehmenden Querschnitt vom Einlass (22) zum Auslass (24) definieren.

6. Ventilkonstruktion nach Anspruch 1, **dadurch gekennzeichnet, dass** ein allmählich stufenweise zunehmender Durchflussquerschnitt dadurch vorgesehen ist, dass der Hohlkörper (12, 80) eine Anzahl intern paralleler Platten (14) aufweist, die innerhalb des Rohres über die Längsrichtung des Hohlkörpers (12, 80) gegenseitig beabstandet angeordnet sind, und die Platten mit einer Anzahl getrennter Löcher (16) perforiert sind, wodurch die Flüssigkeit strömen kann.

7. Ventilkonstruktion nach Anspruch 6, **dadurch gekennzeichnet, dass** die Platten (14) die gleiche Anzahl Löcher (16) und eine stufenweise zunehmenden Öffnungsfläche vom Einlass (22) zum Auslass (24) aufweisen und/oder dass die Anzahl Löcher (16) mit der annähernd gleichen Öffnungsfläche allmählich in der Reihe vom Einlass (22) zum Auslass (24) zunimmt.

8. Ventilkonstruktion nach einem der Ansprüche 6 - 7, **dadurch gekennzeichnet, dass** jede Platte (14) mit einem äußeren, axial gerichteten Flansch (18) mit einer dem Innendurchmesser eines Hohlkörpers (12, 80) entsprechenden Umfangsausdehnung ausgebildet ist, so dass jede der Platten (14) den Querschnitt des Hohlkörpers (12, 80) bedeckt und dass der Flansch (18) einen Raum (17) zwischen zwei benachbarten Platten (14) definiert oder dass jede Platte (14) den gleichen Durchmesser wie der Innendurchmesser des Rohrs aufweist und Abstandshaltergehäuse mit dem gleichen Außendurchmesser wie der Innendurchmesser des Hohlkörpers (12, 80) die Plattendistanz definieren, während die Einheit mit Gehäusen und Platten bestückt ist, die wiederum im Inneren des Hohlkörpers (12, 80) abwechselnd aufeinander gestapelt sind.

9. Ventilkonstruktion nach einem der angehenden Ansprüche, **dadurch gekennzeichnet, dass** eine Anzahl Bündel paralleler Hohlkörper (12, 80) über U-förmige Rohrteile (28) gegenseitig verbunden sind, um einen zickzackförmigen Strömungsverlauf auszubilden.

10. Ventilkonstruktion nach Anspruch 9, **dadurch gekennzeichnet, dass** jedes Bündel drei parallele Hohlkörper (12, 80) aufweist, die über U-förmige Rohrteile (28) miteinander verbunden sind.

11. Ventilkonstruktion nach einem der vorhergehenden Ansprüche, **dadurch gekennzeichnet, dass** der schließende Körper (70) ein in einem Ventilgehäuse (60) angeordnetes Kugelventil ist.

## Revendications

1. Système de valve (60) pour la réduction de la pression dans un écoulement de liquide depuis une entrée (22) vers une sortie (24) du système de valve (60), pour empêcher toute formation de gaz par ébullition éclair dans le liquide, comprenant un corps de valve de fermeture (70) qui peut être réinitialisé entre une position qui ferme l'écoulement traversant de liquide et une position qui ouvre l'écoulement traversant total, et toute position intermédiaire, **caractérisé en ce que** le corps de valve (70) comprend une unité d'écoulement traversant de liquide comprenant un certain nombre de corps creux (12, 80), dans lequel l'intérieur de chaque corps creux (12, 80) comprend une unité pleine (44, 144) qui avec l'intérieur du corps creux définit un canal d'écoulement séparé présentant une section transversale d'écoulement à croissance progressive ou continue, calculée depuis une extrémité d'entrée à une extrémité de sortie du corps creux.

2. Système de valve selon la revendication 1, **caractérisé en ce que** chaque unité pleine (44, 144) est un corps en forme de tige approximativement circulaire (44, 144) dont la surface est formée d'évidements étendus (42, 142) qui définissent, avec l'intérieur du corps creux (12, 80), lesdits canaux d'écoulement ayant des sections transversales croissantes.

3. Système de valve t selon la revendication 2, **caractérisé en ce que** les évidements (42, 142) ont la forme d'évidements concaves en forme de V ou en forme de U, formés le long du corps (12, 80) ou ils sont formés selon une forme évidée en spirale autour du corps plein en forme de tige.

4. Système de valve selon l'une quelconque des revendications 1-3, **caractérisé en ce que** le corps plein en forme de tige (44, 144) comprend une forme à côtés multiples, dont les coins étendus (230), depuis une extrémité (250) à l'autre extrémité (252) sont découpés pour former un plan ou une surface incurvée (242) qui converge jusqu'à l'autre extrémité (252) vers un axe longitudinal A à travers le corps.

5. Système de valve selon la revendication 1, **caractérisé en ce que** l'unité pleine comprend un certain nombre de corps en forme de tige étendus (244) d'une forme carrée qui se situent mutuellement près les uns des autres et chaque corps en forme de tige (244) est agencé à l'intérieur d'un boîtier (20), **en ce que** quatre tiges mutuellement attenantes (244) entre elles définissent des chemins d'écoulement longitudinaux (243a) ayant une section transversale à croissance progressive depuis l'entrée (22) vers la sortie (24).

6. Système de valve selon la revendication 1, **caractérisé en ce qu'**une section transversale à écoulement traversant à croissance progressive par degrés est disposée, **en ce que** le corps creux (12, 80) comprend un certain nombre de plaques intérieurement parallèles (14) mutuellement espacées agencées à l'intérieur du tuyau dans la direction longitudinale du corps creux (12, 80), et les plaques sont perforées d'un certain nombre de trous séparés (16) par lesquels le liquide peut s'écouler.

7. Système de valve selon la revendication 6, **caractérisé en ce que** les plaques (14) possèdent le même nombre de trous (16) et une superficie d'ouverture à croissance par degrés depuis l'entrée (22) vers la sortie (24), et/ou **en ce que** le nombre de trous (16) ayant approximativement la même superficie d'ouverture, augmente progressivement dans la rangée depuis l'entrée (22) vers la sortie (24).

8. Système de valve selon l'une quelconque des revendications 6-7, **caractérisé en ce que** chaque plaque (16) est formée d'une bride extérieure axialement dirigée (14) avec une extension périphérique correspondant au diamètre interne d'un corps creux (12, 80) de telle sorte que chacune des plaques (14) recouvre la section transversale du corps creux (12, 80) et que la bride (18) définit un espace (17) entre deux plaques attenantes (14), ou que chaque plaque (14) a le même diamètre que le diamètre interne du tuyau et des boîtiers d'espacement du même diamètre extérieur que le diamètre interne du corps creux (12, 80) définissent la distance entre les plaques, comme l'unité est équipée de boîtiers et de plaques à leur tour empilés en alternance les uns sur les autres à l'intérieur du corps creux (12, 80).

9. Système de valve selon l'une quelconque des revendications précédentes, **caractérisé en ce qu'**un certain nombre d'ensembles de corps creux parallèles (12, 80) sont mutuellement reliés par le biais de parties de tuyau en forme de U (28) pour former un parcours d'écoulement en zigzag.

10. Système de valve selon la revendication 9, **caractérisé en ce que** chaque ensemble comprend trois corps creux parallèles (12, 80) qui sont reliés les uns aux autres par le biais de parties de tuyau en forme de U (28).

11. Système de valve selon l'une quelconque des revendications précédentes, **caractérisé en ce que** le corps de fermeture (70) est un clapet à bille agencé dans un boîtier de clapet (60).
